# EUROPEAN PATENT APPLICATION

(11) **EP 4 546 860 A1**
(43) Date of publication of application: **30.04.2025**
(21) Application number: 23827028.4
(22) Date of filing: 09.06.2023
(51) Int. Cl.: H04W 24/10, H04W 92/12

(54) **COMPUTER SYSTEM, E2 NODE, AND METHODS FOR THESE**

(30) Priority: 21.06.2022 JP 2022099686
(71) Applicant: NEC Corporation, 108-8001 Tokyo (JP)
(72) Inventor: KOZUKA, Hideki, Tokyo 108-8001 (JP)
(74) Representative: Mathys & Squire
(86) International application number: PCT/JP2023/021627
(87) International publication number: WO 2023/248842

(57) **Abstract**

A RAN Intelligent Controller (RIC) (1) configures between the RIC (1) and an E2 Node (2) a first subscription to a REPORT service provided by the E2 Node. While the first subscription has already been configured, the RIC (1) sends to the E2 Node (2) a first message requesting an update of one or both of an event trigger definition and an action definition regarding a REPORT action that has been agreed upon in the first subscription. For example, this can provide enhancements to enable the updating of REPORT type subscriptions on the Open Radio Access Network (O-RAN) E2 interface.

## Description

### Technical Field

The present disclosure relates to a radio communication system, and in particular to an interface between a radio access network node and a control node, system, or platform.

### Background Art

The Open Radio Access Network (O-RAN) Alliance is a community of mobile operators, vendors, and research and academic institutions, and its mission is to re-shape radio access networks (RANs) to be more intelligent, open, virtualized and fully interoperable. O-RAN Working Group 3 (WG3) has conducted technical studies and provided technical specifications for the Near-Real-Time (Near-RT) RAN Intelligent Controller (RIC) and the E2 interface (see, for example, Non-Patent Literature 1-6).

A Near-RT RIC is a logical function that enables near-real-time control and optimization of RAN elements and resources through fine-grained (e.g., User Equipment (UE) basis, Cell basis) data collection and actions over an E2 interface. A Near-RT RIC hosts a set of applications called xApps and provides a set of platform functions that are commonly used to support specific functions hosted by the xApps. The set of platform functions includes Database and Shared Data Layer (SDL), xApp subscription management, Conflict Mitigation, Messaging Infrastructure, Interface Termination, and Application Programming Interface (API) Enablement. Interface Termination includes E2 termination, A1 termination, and O1 termination, which provide termination of E2, A1, and O1 interfaces, respectively.

An E2 interface connects the Near-RT RIC to one or more E2 Nodes. An E2 Node is a logical node that terminates an E2 interface. An E2 Node is a RAN node that exposes one or more RAN functions to the Near-RT RIC and hosted xApps. For NR access, E2 Nodes include one or more O-RAN Central Units - Control Plane (O-CU-CPs), one or more O-RAN Central Units - User Plane (O-CU-UPs), one or more O-RAN Distributed Units (O-DUs), or any combination thereof. On the other hand, for Evolved Universal Terrestrial Radio Access (E-UTRA) access, E2 Nodes include one or more O-RAN eNodeBs (O-eNBs).

An E2 Node provides one or more services to the Near-RT RIC to allow access to messages and measurements, or to allow control of the E2 Node from the Near-RT RIC, or both. These services are called RIC services. The RIC services provided by E2 Nodes and available to the Near-RT RIC include four services: REPORT, INSERT, CONTROL, and POLICY services. These RIC services can be combined in different ways to implement an E2 Service Model (E2SM). An E2 Service Model depends on the RAN functions and Radio Access Technology (RAT) of an E2 Node and describes the functions in the E2 Node that can be controlled by the Near-RT RIC and the related procedures. Currently, E2 service models include E2SM Key Performance Measurement (E2SM-KPM), E2SM Network Interfaces (E2SM-NI), and E2SM RAN Control (E2SM-RC).

An E2 interface provides E2 Application Protocol (E2AP) procedures that enable the exchange of control signaling information between the endpoints, provide RIC services, and allow the Near-RT RIC and hosted xApp applications to use a set of services described in an E2 service model. These E2AP procedures include, but are not limited to, RIC Subscription, RIC Subscription Delete, RIC Control, and RIC Indication.

The Near-RT RIC uses a RIC Subscription procedure to subscribe to a REPORT, INSERT, or POLICY service. For the REPORT service, the Near-RT RIC platform functions (i.e., xApp subscription management) receive a subscription request from an xApp via an E2 Related API. The request from the xApp specifies a list of E2 Nodes, a RAN function, an event trigger, and an action list. In response to this request from the xApp, the platform functions (i.e., xApp subscription management and E2 termination) use a RIC Subscription procedure to request an E2 Node to send INDICATION messages to the Near-RT RIC.

The xApp subscription management in the Near-RT RIC is capable of merging multiple identical subscriptions related to REPORT services from different xApps into a single subscription toward an E2 Node (see, for example, Section 9.3.2.1 in Non-Patent Literature 1). Specifically, the xApp subscription management detects whether a new subscription requested by an xApp via an E2 Related API is a duplicate of (or identical to) an existing subscription that has already been configured, created, or established with an E2 Node. In other words, the xApp subscription management detects whether a new subscription requested by an xApp has the same content as an existing subscription. If a new subscription is a duplicate of an existing subscription, the xApp subscription management does not perform a redundant RIC Subscription procedure for the E2 Node to add the duplicate subscription. Instead, the xApp subscription management simply requests the E2 termination to add the xApp ID of the new xApp to the distribution list associated with the existing subscription, and sends a Subscription Response (success) to the new xApp via the E2 Related API.

In other words, the xApp subscription management allows multiple identical subscriptions related to REPORT services to be merged.

### Citation List

### Non Patent Literature

[Non-Patent Literature 1] O-RAN.WG3.RICARCH-v02.01 "O-RAN Working Group 3 Near-Real-time RAN Intelligent Controller Near-RT RIC Architecture", March 2022
[Non-Patent Literature 2] O-RAN.WG3.E2GAP-v02.01 "O-RAN Working Group 3 Near-Real-time RAN Intelligent Controller Architecture & E2 General Aspects and Principles", March 2022
[Non-Patent Literature 3] O-RAN.WG3.E2AP-v02.01 "O-RAN Working Group 3, Near-Real-time RAN Intelligent Controller, E2 Application Protocol (E2AP)", March 2022
[Non-Patent Literature 4] O-RAN.WG3.E2SM-v02.01 "O-RAN Working Group 3 Near-Real-time RAN Intelligent Controller E2 Service Model (E2SM)", March 2022
[Non-Patent Literature 5] O-RAN.WG3.E2SM-KPM-v02.01 "O-RAN Working Group 3 Near-Real-time RAN Intelligent Controller E2 Service Model (E2SM) KPM", March 2022
[Non-Patent Literature 6] O-RAN.WG3.E2SM-RC-v01.01 "O-RAN Working Group 3 Near-Real-time RAN Intelligent Controller E2 Service Model (E2SM), RAN Control", March 2022

### Summary of Invention

### Technical Problem

The inventor studied the technical specifications of the Near-RT RIC and E2 interface and found several problems. One of these problems is related to the xApp subscription management. As mentioned above, the xApp subscription management allows multiple identical subscriptions related to REPORT services to be merged. This can help to avoid redundant E2AP transactions between a Near-RT RIC and an E2 Node. It can also allow an E2 node to avoid the unnecessary action of sending multiple identical RIC INDICATION messages with the same trigger. However, if a new subscription requested by an xApp is not exactly the same as an existing subscription, a RIC Subscription procedure is performed for this new subscription, and the E2 node shall additionally send a RIC INDICATION message for the new subscription. This may cause a problem where the number of RIC INDICATION messages that the E2 node should send cannot be sufficiently reduced.

Consider several cases where the trigger definition and action definition of a new subscription partially overlap with those of an existing subscription. One example is where multiple subscriptions have the same trigger definition (e.g., the same reporting period for periodic reporting, or the same trigger event for aperiodic reporting), but have different action definitions (e.g., different measurement items, different specific cell designations, or different specific UE(s) designations). In this case, the E2 Node needs to send multiple RIC INDICATION messages with different contents at the same time based on the same trigger definition. If these multiple RIC INDICATION messages can be integrated into one RIC INDICATION message, it is possible to reduce the load on the E2 Node.

In other cases, there may be multiple subscriptions with the same action definition but different trigger definitions. For example, if the reporting cycle of the first subscription is an integer multiple of the reporting cycle of the second subscription, the E2 node may need to send multiple RIC INDICATION messages with the same content at the same time.

The other problem found by the inventor is related to updating a REPORT type subscription. In the current O-RAN WG3 technical specifications, a REPORT type subscription cannot be updated or modified. If a REPORT type subscription needs to be updated or modified, the previously created subscription must be deleted first. Specifically, an xApp should first request that the xApp Subscription Management delete the existing REPORT type subscription, and then request that the xApp Subscription Management create a new, updated REPORT type subscription.

This restriction on updating of REPORT type subscriptions in the current O-RAN WG3 technical specifications may be a necessary trade-off to allow internal merging of multiple identical subscriptions. This is because, while multiple identical subscriptions from multiple xApps are internally merged into a single subscription toward an E2 Node, if that single subscription is updated in response to a request from one of those xApps, the remaining xApps will no longer be able to receive indications generated by the desired trigger or with the desired content. Addressing these issues and allowing existing report type subscriptions to be updated could potentially help reduce the number of E2AP transactions required to update report type subscriptions.

One of the objects to be achieved by the example embodiments disclosed herein is to provide apparatuses, methods, and programs that contribute to solving at least one of a plurality of problems, including the above-mentioned problems. It should be noted that this object is only one of the objects to be achieved by the example embodiments disclosed herein. Other objects or problems and novel features will become apparent from the following description and the accompanying drawings.

### Solution to Problem

In a first aspect, a computer system includes at least one memory and at least one processor coupled to the at least one memory. The at least one processor is configured to provide a plurality of platform functions associated with a RIC. The at least one processor is configured to configure, create, or establish between the RIC and an E2 Node a first subscription to a REPORT service provided by the E2 Node. The at least one processor is further configured to, while the first subscription has already been configured, created, or established, send to the E2 Node a first message requesting an update of one or both of an event trigger definition and an action definition regarding a REPORT action that has been agreed upon in the first subscription.

In a second aspect, a method performed by a computer system includes the steps of:
(a) providing a plurality of platform functions associated with a RIC;
(b) configuring, creating, or establishing between the RIC and an E2 Node, through the plurality of platform functions, a first subscription to a REPORT service provided by the E2 Node; and
(c) while the first subscription has already been configured, created, or established, sending to the E2 Node a first message requesting an update of one or both of an event trigger definition and an action definition regarding a REPORT action that has been agreed upon in the first subscription.

In a third aspect, an E2 Node includes at least one memory and at least one processor coupled to the at least one memory. The at least one processor is configured to configure, create, or establish between a RIC and the E2 Node a first subscription to a REPORT service provided by the E2 Node. The at least one processor is configured to, while the first subscription has already been configured, created, or established, receive from the RIC a first message requesting an update of one or both of an event trigger definition and an action definition regarding a REPORT action that has been agreed upon in the first subscription. The at least one processor is further configured to, based on the first message, update a content of a RIC INDICATION message associated with the REPORT action, or a trigger condition for sending a RIC INDICATION message associated with the REPORT action, or both.

In a fourth aspect, a method performed by an E2 Node includes the steps of:
(a) configuring, creating, or establishing between a RIC and the E2 Node a first subscription to a REPORT service provided by the E2 Node;
(b) while the first subscription has already been configured, created, or established, receiving from the RIC a first message requesting an update of one or both of an event trigger definition and an action definition regarding a REPORT action that has been agreed upon in the first subscription; and
(c) based on the first message, updating a content of a RIC INDICATION message associated with the REPORT action, or a trigger condition for sending a RIC INDICATION message associated with the REPORT action, or both.

In a fifth aspect, a program includes instructions (or software codes) that, when loaded into a computer, cause the computer to perform the method according to the above-described second or fourth aspect.

### Advantageous Effects of Invention

According to the aspects described above, it is possible to provide apparatuses, methods and programs that contribute to solving at least one of a plurality of problems related to a Near-RT RIC and an E2 interface, including the above-mentioned problems.

### Brief Description of Drawings

Fig. 1 shows example configurations of a Near-RT RIC and an E2 Node according to an example embodiment;
Fig. 2 is a flowchart showing an example of an operation of a Near-RT RIC according to an example embodiment;
Fig. 3 is a flowchart showing an example of an operation of an E2 Node RIC according to an example embodiment;
Fig. 4 is a sequence diagram showing an example of operations of a Near-RT RIC and E2 Node according to an example embodiment;
Fig. 5 is a flowchart showing an example of an operation of a Near-RT RIC according to an example embodiment;
Fig. 6 is a sequence diagram showing an example of operations of a Near-RT RIC and E2 Node according to an example embodiment;
Fig. 7 is a sequence diagram showing an example of operations of a Near-RT RIC and E2 Node according to an example embodiment;
Fig. 8 is a sequence diagram showing an example of operations of a Near-RT RIC and E2 Node according to an example embodiment;
Fig. 9 is a flowchart showing an example of an operation of a Near-RT RIC according to an example embodiment;
Fig. 10 is a sequence diagram showing an example of operations of a Near-RT RIC and E2 Node according to an example embodiment;
Fig. 11 is a block diagram showing an example configuration of a Near-RT RIC according to an example embodiment; and
Fig. 12 is a block diagram showing an example configuration of an E2 Node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The plurality of example embodiments described below may be implemented independently or in combination, as appropriate. These example embodiments include novel features that are different from one another. Accordingly, these example embodiments contribute to the achievement of objectives or the solution of problems that are different from one another and contribute to the achievement of advantages that are different from one another.

The multiple example embodiments shown below are primarily described for a Near-RT RIC and an E2 Node that conform to the O-RAN technical specifications. However, these example embodiments can be applied to other systems that support technologies similar to the Near-RT RIC and E2 Node.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

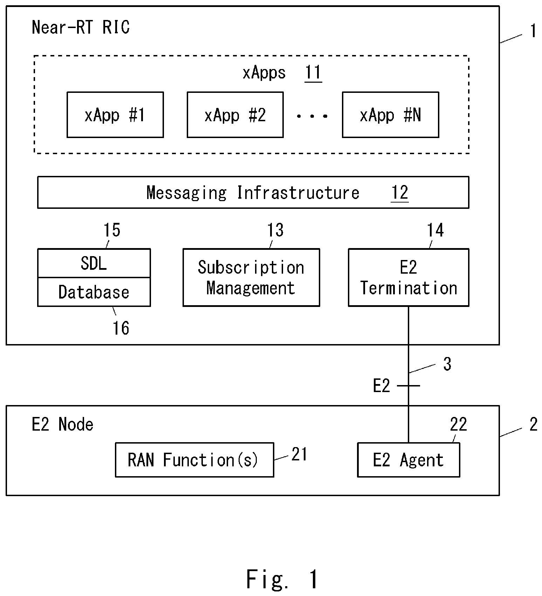

First, the configuration and operation of a plurality of elements common to a plurality of example embodiments are described. Fig. 1 shows an example configuration of a system according to a plurality of example embodiments. In the example in Fig. 1, the system includes a Near-RT RIC 1 and an E2 Node 2. Each element shown in Fig. 1 may be implemented, for example, as a network element on dedicated hardware, as a software instance running on dedicated hardware, or as a virtualized function instantiated on an application platform. Each element shown in Fig. 1 may be implemented as a computer system having one or more memories and one or more processors. A computer system may be a single computer system or a (distributed) multiple computer systems. A computer system may be a stand-alone computer or may include one or more networked computers.

A Near-RT RIC 1 is a logical function that enables near-real-time control and optimization of RAN elements and resources through fine-grained (e.g., User Equipment (UE) basis, Cell basis) data collection and actions over an E2 interface. The Near-RT RIC hosts one or more xApps 11 and provides a set of platform functions that are commonly used to support specific functions hosted by the xApps 11. By way of example, but not limitation, the set of platform functions includes messaging infrastructure 12, xApp subscription management 13, E2 termination 14, shared data layer (SDL) 15, and database 16, as shown in Fig. 1. The set of platform functions may also include other functions, such as conflict mitigation, A1 termination, O1 termination, and API enablement. The E2 termination 14 terminates at least an E2 interface 3 with the E2 Node 2.

The E2 Node 2 provides one or more services to the Near-RT RIC 1 to allow access to messages and measurements, or to allow control of the E2 Node 2 from the Near-RT RIC 1, or both. These services are called RIC services. In the example embodiments, the RIC services provided by the E2 Node 2 and available to the Near-RT RIC 1 include at least the RIC REPORT service. The RIC REPORT service includes the sending of RIC INDICATION messages from the E2 Node 2 to the Near-RT RIC 1. The E2 Node 2 may also provide one or more of the INSERT, CONTROL, and POLICY services. These RIC services can be combined in different ways to implement an E2 Service Model (E2SM).

With respect to the E2 interface, the E2 Node 2 includes one or more RAN functions 21 and an E2 agent 22. The one or more RAN functions 21 support one or more RIC services and can be controlled by the Near-RT RIC 1. The E2 agent 22 terminates the E2 interface 3 with the Near-RT RIC 1 and is used to forward and receive E2 messages. This allows the E2 Node 2 to expose the one or more RAN functions 21 to the Near-RT RIC 1 and the hosted xApps 11 via the E2 agent 22.

The E2 Node 2 may also be referred to as a RAN node. The E2 Node 2 may be an O-CU-CP, an O-CU-UP, or an O-DU for NR access. Alternatively, the E2 Node 2 may be an O-eNB for Evolved Universal Terrestrial Radio Access (E-UTRA) access.

The E2 interface 3 provides E2AP procedures that enable the exchange of control signaling information between the endpoints, provide RIC services, and allow the Near-RT RIC 1 and the hosted xApp applications 11 to use a set of services described in an E2 service model. These E2AP procedures include, but are not limited to, RIC Subscription, RIC Subscription Delete, RIC Control, and RIC Indication.

The Near-RT RIC 1 uses a RIC Subscription procedure to subscribe to a REPORT, INSERT, or POLICY service. For the REPORT service, the Near-RT RIC platform functions (i.e., xApp subscription management 13) receive a subscription request or proposal from one of the xApps 11 via an E2 Related API provided by the messaging infrastructure 12. The request or proposal from the xApp specifies a list of E2 Nodes, a RAN function, an event trigger, and an action list. In the example embodiments, the list of E2 Nodes includes at least the E2 Node 2. In response to this request or proposal from the xApp, the platform functions (i.e., xApp subscription management 13 and E2 termination 14) use a RIC Subscription procedure to request the E2 Node 2 to send INDICATION messages to the Near-RT RIC 1.

The xApp subscription management 13 in the Near-RT RIC 1 is capable of merging multiple identical subscriptions related to REPORT services from different xApps into a single subscription toward the E2 Node 2. Specifically, the x App subscription management 13 detects whether a new subscription requested or proposed by an xApp via an E2 Related API is a duplicate of (or identical to) an existing subscription that has already been configured, created, or established with the E2 Node 2. In other words, the xApp subscription management 13 detects whether a new subscription requested by an xApp has the same content (i.e., the same event trigger definition and the same action definition) as an existing subscription. If a new subscription is a duplicate of an existing subscription, the xApp subscription management 13 does not perform a redundant RIC Subscription procedure for the E2 Node 2 to add the duplicate subscription. Instead, the xApp subscription management 13 simply requests the E2 termination 14 to add the xApp ID of the new xApp to the distribution list associated with the existing subscription, and sends a Subscription Response (success) to the new xApp via the E2 Related API.

In other words, the xApp subscription management 13 allows multiple identical subscriptions related to REPORT services to be merged internally. This helps to avoid redundant E2AP transactions between the Near-RT RIC 1 and the E2 Node 2. It also allows the E2 Node 2 to avoid the unnecessary action of sending multiple identical RIC INDICATION messages with the same trigger.

### First Example Embodiment

The example configuration of a radio communication system according to this example embodiment may be the same as the example shown in Fig. 1. This example embodiment provides enhancements that allow the Near-RT RIC 1 and the E2 Node 2 to update an existing REPORT type subscription.

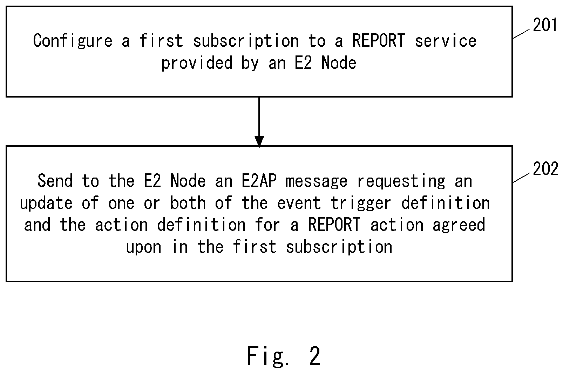

Fig. 2 shows an example of the operation of the Near-RT RIC 1 in this example embodiment. In step 201, the Near-RT RIC 1 configures a first subscription to a REPORT service provided by the E2 Node 2. Specifically, in response to a REPORT type subscription being requested or proposed by an xApp, the platform functions (i.e., xApp subscription management 13 and E2 termination 14) of the Near-RT RIC 1 perform a RIC Subscription procedure to the E2 Node 2 to configure, create, or establish the first subscription. The platform functions may detect whether the subscription proposed by the xApp is a new subscription that does not overlap with the existing subscriptions. If the subscription proposed by the xApp does not overlap with any existing subscription, the platform functions may initiate the RIC Subscription procedure to the E2 Node 2.

In step 202, the Near-RT RIC 1 sends to the E2 Node 2 an E2AP message requesting an update of one or both of the event trigger definition and the action definition for a REPORT action agreed upon in the first subscription. In other words, the Near-RT RIC 1 requests that the E2 Node 2 update the existing REPORT type subscription.

To inform the E2 Node 2 that the E2AP message is for the purpose of updating the existing first subscription, the E2AP message may specify the RIC REQUEST ID associated with the first subscription at the time of configuration, creation, or establishment of the first subscription was configured, created, or established. More specifically, the E2AP message may specify the same RIC REQUEST ID and the same RIC ACTION ID as specified in the previous RIC Subscription Request message sent when the existing first subscription was configured, created, or established. In addition, the E2AP message may specify an event trigger definition and an action definition that partially overlap with (or partially differ from) those specified when the existing first subscription was configured, created, or established.

The E2AP message may be a RIC Subscription Request message. In this case, the RIC Subscription Request message may specify the same RIC REQUEST ID and the same RIC ACTION ID as specified in the previous RIC Subscription Request message sent when the existing first subscription was configured, created, or established, and may also specify an event trigger definition and an action definition that partially overlap with those specified in the previous RIC Subscription Request message. In other words, the procedure for updating the existing first subscription may be a (modified) RIC Subscription procedure. Alternatively, the E2AP message may be a newly defined message that is different from the RIC Subscription Request message. The name of the newly defined message may be, without limitation, a RIC Subscription Update message. In other words, the procedure for updating the existing first subscription may be a newly defined E2AP procedure, for example, a RIC Subscription Update procedure.

In the first implementation, the platform functions of the Near-RT RIC 1 may perform step 202 of FIG. 2 in response to receiving a request or proposal to update the existing first subscription via an E2 Related API from one of the one or more xApps associated with the existing first subscription. The request or proposal from an xApp to update the existing first subscription may specify an E2 Request ID to identify the existing active subscription. In addition, the request or proposal from an xApp to update the existing first subscription may specify an E2 Action ID to identify one of the one or more actions associated with the existing active subscription. The platform functions of the Near-RT RIC 1 maintain mappings of E2 Request IDs and E2 Action IDs used in the E2 Related API to RIC REQUEST IDs and RIC ACTION IDs used in the E2 interface. Accordingly, the platform functions of the Near-RT RIC 1 can determine the RIC REQUEST ID (and RIC ACTION ID) of the existing first subscription associated with the E2 Request ID (and E2 Action ID) specified by the update request or proposal received on the E2 Related API.

The first implementation allows the Near-RT RIC 1 to update an existing REPORT type subscription. If the existing first subscription is associated with only one xApp, the platform functions of the Near-RT RIC 1 need only send the contents of the RIC INDICATION message based on the updated subscription to the one xApp. In contrast, if the existing first subscription is updated based on a request or proposal from one xApp, while multiple identical subscriptions for multiple xApps are internally merged into the single first subscription, the platform functions of the Near-RT RIC 1 may perform additional actions related to the handling of the RIC INDICATION message. Specifically, the platform functions of the Near-RT RIC 1 may selectively send the RIC INDICATION message received from the E2 Node 2 to only a subset of the multiple xApps associated with the first subscription. Alternatively, the platform functions of the Near-RT RIC 1 may send a first segmented Indication message containing only some of the report items contained in the RIC INDICATION message to some of the multiple xApps, and a second segmented Indication message containing the remaining report items to the remaining xApps. Details of this handling of the RIC INDICATION message are explained in later example embodiments.

In the second implementation, the platform functions of the Near-RT RIC 1 may perform step 202 in response to a new second subscription being requested or proposed by a second xApp that is different from the one or more xApps (first xApps) associated with the existing first subscription. In this case, the new second subscription request or proposal from the second xApp specifies an event trigger definition and an action definition that partially overlap with (or partially differ from) those agreed upon in the existing first subscription.

For example, the event trigger definition of the second subscription may be the same as that of the first subscription, while the action definition of the second subscription may be partially or completely different from that of the first subscription. Different action definitions can be, for example, different measurement items, different specific cell designations, or different specific UE(s) designations, or any combination of these. Different action definitions mean that the report items that xApps wish to receive in a RIC INDICATION message are different. Accordingly, in this example, the E2AP message in step 202 causes the E2 Node 2 to send a common RIC INDICATION message to the Near-RT RIC 1 containing both a first report item for the first subscription and a second report item for the second subscription.

Additionally or alternatively, the action definition of the second subscription may be the same as that of the first subscription, while the event trigger definition of the second subscription may be partially different from that of the first subscription. Both the event trigger definitions for the first and second subscriptions may be periodic reporting, but the reporting period for the second subscription may be a multiple (i.e., an integral multiple) or a divisor of the reporting period for the first subscription. Alternatively, both the first and second subscription event trigger definitions may be aperiodic reporting. In this case, the one or more aperiodic reporting trigger events for the second subscription may partially overlap and partially differ from the one or more aperiodic reporting trigger events for the first subscription. Accordingly, in this example, the E2AP message in step 202 causes the E2 Node 2 to send a first RIC INDICATION message and a second RIC INDICATION message to the Near-RT RIC 1. The first RIC INDICATION message is based on the first trigger condition according to the first subscription. The second RIC INDICATION message, on the other hand, is based on the second trigger condition according to the second subscription. The first RIC INDICATION message and the second RIC INDICATION message each specify the same RIC REQUEST ID and the same RIC ACTION ID.

The second implementation allows the Near-RT RIC 1 to update an existing REPORT type subscription. In addition, according to the second implementation, the platform functions of the Near-RT RIC 1 can internally merge the requests or proposals from xApps for multiple REPORT type subscriptions that have partially overlapping (but not completely identical) trigger definitions and action definitions, into a single subscription toward the E2 Node. The platform functions of the Near-RT RIC 1 may perform step 202 of Fig. 2 to internally merge multiple partially different subscriptions from xApps into a single subscription toward the E2 Node.

In the second implementation, as was explained with respect to the first implementation, the platform functions of the Near-RT RIC 1 may also perform additional operations related to the handling of RIC INDICATION messages. Details of this handling of RIC INDICATION messages are explained in later example embodiments.

The second implementation can help to reduce the number of RIC INDICATION messages that the E2 Node 2 should send. For example, consider the case where the event trigger definition of the second subscription is the same as that of the first subscription, and the action definition of the second subscription is partially or completely different from that of the first subscription. In this case, the E2 Node 2 can report both the first report item for the first subscription and the second report item for the second subscription to the Near-RT RIC 1 using a single RIC INDICATION message. Therefore, this can help to reduce the number of RIC INDICATION messages that the E2 Node 2 needs to send.

Next, consider the case where the action definition of the second subscription is the same as that of the first subscription, and the event trigger definition of the second subscription is partially different from that of the first subscription. When the second reporting period of the second subscription is a multiple (i.e., an integral multiple) or a divisor of the first reporting period of the first subscription, the Near-RT RIC 1 may internally merge these two subscriptions by updating the first subscription. In this case, the Near-RT RIC 1 may update the reporting period of the existing first subscription with the lesser of the first and second reporting periods. As a result, every few RIC INDICATION messages can be used to report both the first and second subscriptions. Therefore, this can help to reduce the number of RIC INDICATION messages that the E2 Node 2 needs to send.

In the third implementation, while the first and second REPORT type subscriptions have been internally merged according to the second implementation described above, the platform functions of the Near-RT RIC 1 may perform step 202 to delete one of the first and second subscriptions. Specifically, if the deletion of the second subscription is proposed by an xApp, the platform functions of the Near-RT RIC 1 may detect that the second subscription is not associated with any other xApps. The platform functions may then update the existing single subscription with the E2 Node 2 to remove the event trigger definition or action definition associated with the second subscription, while retaining the event trigger definition or action definition for the first subscription.

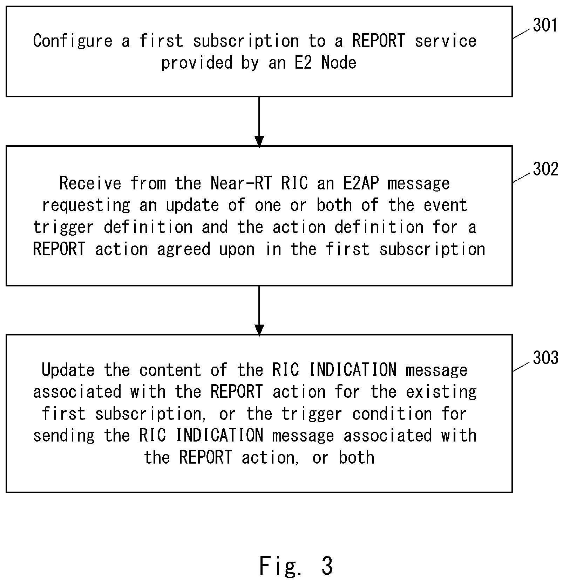

Fig. 3 shows an example of the operation of the E2 Node 2. In step 301, the E2 Node 2 configures a first subscription to a REPORT service provided by the E2 Node 2. Specifically, the E2 Node 2 performs a RIC Subscription procedure initiated by the Near-RT RIC 1 for a REPORT type subscription to configure, create, or establish the first subscription.

In step 302, the E2 Node 2 receives an E2AP message from the Near-RT RIC 1 requesting to update either or both the event trigger definition and the action definition for a REPORT action agreed upon in the first subscription. In other words, the E2 Node 2 receives a request from the Near-RT RIC 1 to update the existing REPORT type subscription. The specific examples of the E2AP message and the specific examples of the content in the E2AP message may be the same as those described in relation to Fig. 2.

In step 303, based on the E2AP message of step 302, the E2 Node 2 updates the configuration for the existing first subscription. Specifically, the E2 Node 2 updates the content of the RIC INDICATION message associated with the REPORT action for the first subscription, or the trigger condition for sending the RIC INDICATION message associated with the REPORT action, or both.

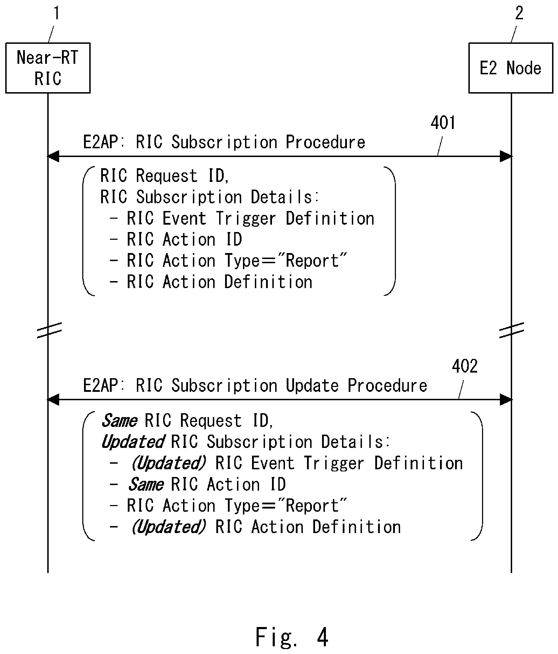

Fig. 4 shows an example of the operation of the Near-RT RIC 1 and the E2 Node 2. Step 401 corresponds to step 201 in Fig. 2 and step 301 in Fig. 3. In step 401, the Near-RT RIC 1 and the E2 Node 2 perform a RIC Subscription procedure to configure, create, or establish a first subscription to a REPORT service. The Near-RT RIC 1 sends a RIC SUBSCRIPTION REQUEST message to the E2 Node 2, and the E2 Node 2 responds to the Near-RT RIC 1 with a RIC SUBSCRIPTION RESPONSE message.

The RIC SUBSCRIPTION REQUEST message of step 401 contains a RIC Request ID Information Element (IE) and also contains a RIC Subscription Details IE. The RIC Request ID IE specifies a RIC Request ID number to identify the first subscription. The RIC Subscription Details IE contains a RIC Event Trigger Definition IE, and also contains an action list (Sequence of Actions).

The RIC Event Trigger Definition IE indicates the RIC event trigger description that conforms to the style type and format specified in an E2SM. In the case of E2SM-KPM, the RIC Event Trigger Definition IE specifies an integer value representing the reporting period expressed in units of 1 millisecond. In the case of E2SM-RC, the RIC Event Trigger Definition IE specifies the trigger event for aperiodic reporting.

The action list (Sequence of Actions) is a list of one or more REPORT actions. For each action, the action list contains a RIC ACTION ID IE, a RIC Action Type IE, and a RIC Action Definition IE. The RIC ACTION ID IE specifies an action ID number that is unique within the given RIC REQUEST ID. The RIC Action Type IE specifies the type of action, such as Report, Insert, or Policy. Here, the RIC Action Type IE specifies the Report type. The RIC Action Definition IE defines one or more report items to be reported by the E2 Node 2. The RIC Action Definition IE provides parameters to be used when executing the REPORT service, according to the style type and format specified in an E2SM. In the case of E2SM-KPM, the RIC Action Definition IE specifies a measurement information list (Measurement Information List IE) along with other information elements. In the case of E2SM-RC, the RIC Action Definition IE specifies a list of parameters to be reported (Parameters to be Reported List IE).

The RIC SUBSCRIPTION RESPONSE message in step 401 contains a RIC Request ID IE and a RIC Actions Admitted List IE, and may optionally contain a RIC Actions Not Admitted List IE. The RIC Request ID IE specifies the RIC REQUEST ID number to identify the first subscription. The RIC Actions Admitted List IE specifies the RIC Action ID(s) of the action(s) accepted by the E2 Node 2 out of the one or more actions requested in the RIC SUBSCRIPTION REQUEST message. The RIC Actions Not Admitted List IE specifies the RIC Action ID(s) of the action(s) not accepted by the E2 Node 2 out of the one or more actions requested in the RIC SUBSCRIPTION REQUEST message.

Step 402 corresponds to step 202 in Fig. 2 and steps 302 and 303 in Fig. 3. In step 402, a RIC Subscription Update procedure is performed to update the existing first subscription. In an example, the Near-RT RIC 1 sends a RIC SUBSCRIPTION UPDATE message to the E2 Node 2, and the E2 Node 2 responds to the Near-RT RIC 1 with a RIC SUBSCRIPTION UPDATE RESPONSE message. However, as explained earlier, the update of the existing first subscription may be performed by a (modified) RIC Subscription procedure. In this case, the Near-RT RIC 1 sends a RIC SUBSCRIPTION REQUEST message to the E2 Node 2, and the E2 Node 2 responds to the Near-RT RIC 1 with a RIC SUBSCRIPTION RESPONSE message.

The E2AP message sent by the Near-RT RIC 1 in step 402 indicates an update of the existing first subscription to the E2 Node 2. To accomplish this, the E2AP message specifies the same RIC REQUEST ID as indicated by the RIC SUBSCRIPTION REQUEST message in step 401. The E2AP message also contains an updated RIC Subscription Details IE. This RIC Subscription Details IE is used to update one or both of the event trigger definition and the action definition specified in the RIC SUBSCRIPTION REQUEST message in step 401. The RIC Subscription Details IE in step 402 includes a RIC ACTION ID IE that specifies the same number as the RIC Subscription Details IE in step 401. The RIC Subscription Details IE in step 402 includes a RIC Event Trigger Definition IE and a RIC Action Definition IE, one or both of which contains updated content compared to that in the RIC Subscription Details IE in step 401.

The example shown in Fig. 4 can provide details of the E2AP procedure for updating an existing REPORT type subscription.

The following are specific examples of conditions under which multiple subscriptions with partially overlapping (or partially different) event trigger definitions and action definitions can be merged. The platform functions of the Near-RT RIC 1 (e.g., xApp subscription management 13) may determine whether the requests or proposals for multiple subscriptions from xApps meet these conditions.

### (1) E2SM-KPM REPORT Service Styles 1 to 5

If the event trigger definitions of the first and second subscriptions, i.e., the reporting periods, are different, whether or not these subscriptions can be merged depends on the details of the action definition, specifically the measurement items to be collected. For example, the platform functions can merge the multiple subscriptions if the platform functions can generate the value of a measurement item to be reported to an xApp by averaging measured values reported by multiple Indication messages. In the case where merging is possible, if the reporting period of one subscription is a multiple (i.e., an integral multiple) of the reporting period of the other subscription, the platform functions can internally merge these two subscriptions into a single subscription to the E2 Node 2 and set the reporting period to the lesser of the two reporting periods.

### (2) E2SM-KPM REPORT Service Style 1: E2 Node Measurement

If the action definitions of the first and second subscriptions are partially different, the platform functions may merge these multiple subscriptions. For example, the second subscription has the same target cell(s) for collecting measurement information as the first subscription, but the measurement information list (report item(s)) of the second subscription is partially or completely different from that of the first subscription. In this case, the platform functions add one or more additional measurement types specified in the measurement information list of the second subscription to the Measurement Information List IE in the E2SM-KPM Action Definition Format 1.

In another example, the second subscription has a different target cell(s) for collecting measurement information than the first subscription. In this case, the Near-RT RIC 1 and the E2 Node 2 use an E2SM-KPM Action Definition Format 1 extended to specify a list of Cell Global IDs. The platform functions of the Near-RT RIC 1 add an additional cell ID(s) associated with the second report item of the second subscription to the list of Cell Global IDs IE in the extended E2SM-KPM Action Definition Format 1.

### (3) E2SM-KPM REPORT Service Style 2: E2 Node Measurement for a single UE

If the action definitions of the first and second subscriptions are partially different, the platform functions may merge these multiple subscriptions. For example, the second subscription has the same target UE(s) for collecting measurement information as the first subscription, but the measurement information list (report item(s)) of the second subscription is partially or completely different from that of the first subscription. In this case, the platform functions add one or more additional measurement types specified in the measurement information list of the second subscription to the Measurement Information List IE in the E2SM-KPM Action Definition Format 2.

### (4) E2SM-KPM REPORT Service Style 3: Condition-based, UE-level E2 Node Measurement

If the action definitions of the first and second subscriptions are partially different, the platform functions may merge these multiple subscriptions. For example, the second subscription has the same target cell(s) for collecting measurement information as the first subscription, but the list of matching conditions of the second subscription is partially or completely different from that of the first subscription. In this case, the platform functions add one or more additional matching conditions specified in the Matching Condition IE of the second subscription to the Measurement Information List IE in the E2SM-KPM Action Definition Format 2.

### (5) E2SM-KPM REPORT Service Style 5: E2 Node Measurement for Multiple UEs

If the action definitions of the first and second subscriptions are partially different, the platform functions may merge these multiple subscriptions. For example, the second subscription has the same target UEs for collecting measurement information as the first subscription, but the measurement information list (report item(s)) of the second subscription is partially or completely different from that of the first subscription. In this case, the platform functions add one or more additional measurement types specified in the measurement information list of the second subscription to the Measurement Information List IE in the E2SM-KPM Action Definition Format 2. In another example, the second subscription has the same measurement information list (report item(s)) as the first subscription, but the target UEs for collecting measurement information of the second subscription are partially or completely different from those of the first subscription. In this case, the platform functions add one or more additional UEs specified in the list of target UEs for the second subscription to the List of Subscribed UE IDs IE of the E2SM-KPM Action Definition Format 5.

The Near-RT RIC 1 and the E2 Node 2 may use an E2SM-KPM Action Definition Format 5 extended so that the minimum value of the UE IDs that can be included in its List of Subscribed UE IDs is 1. When a REPORT type subscription according to E2SM-KPM REPORT Service Style 2 (E2 Node Measurement for a single UE) is requested by an xApp, the Near-RT RIC 1 may send to the E2 Node 2 a RIC SUBSCRIPTION REQUEST message containing an Action Definition IE according to the extended E2SM-KPM Action Definition Format 5. This allows the Near-RT RIC 1 to internally merge the second subscription related to multiple UEs with the existing first subscription related to a single UE.

### (6) E2SM-RC REPORT Service Style 1: Message Copy

In an example, the second subscription has the same event trigger definition (i.e., the message(s) that triggers aperiodic reporting) as the first subscription, but the action definition (i.e., the parameter(s) to be reported) of the second subscription is partially or completely different from that of the first subscription. In this case, the platform functions add one or more additional RAN Parameter IDs related to the second report item (i.e., the parameter(s) to be reported) of the second subscription to the Parameters to be Reported List IE in the E2SM-RC Action Definition Format 1.

In another example, the second subscription has the same action definition (i.e., the parameter(s) to be reported) as the first subscription, but the event trigger definition (i.e., the message(s) that triggers aperiodic reporting) of the second subscription is partially different from that of the first subscription. In this case, the platform functions add the difference between the one or more trigger events of the second subscription and the one or more trigger events of the first subscription to the Sequence of Messages for Event Trigger IE of the E2SM-RC Event Trigger Definition Format 1.

### (7) E2SM-RC REPORT Service Style 3: E2 Node Information

In an example, the second subscription has the same event trigger definition (i.e., the cell(s) that triggers aperiodic reporting) as the first subscription, but the action definition (i.e., the parameter(s) to be reported) of the second subscription is partially or completely different from that of the first subscription. In this case, the platform functions add one or more additional RAN Parameter IDs related to the second report item (i.e., the parameter(s) to be reported) of the second subscription to the Parameters to be Reported List IE in the E2SM-RC Action Definition Format 1.

In another example, the second subscription has the same action definition (i.e., the parameter(s) to be reported) as the first subscription, but the event trigger definition (i.e., the cell(s) that triggers aperiodic reporting) of the second subscription is partially different from that of the first subscription. In this case, the platform functions add the difference between the one or more trigger events of the second subscription and the one or more trigger events of the first subscription to the Sequence of E2 Node Information Change IE of the E2SM-RC Event Trigger Definition Format 3.

### (8) E2SM-RC REPORT Service Style 4: UE Information

In an example, the second subscription has the same event trigger definition (i.e., the UE(s) that triggers aperiodic reporting) as the first subscription, but the action definition (i.e., the parameter(s) to be reported) of the second subscription is partially or completely different from that of the first subscription. In this case, the platform functions add one or more additional RAN Parameter IDs related to the second report item (i.e., the parameter(s) to be reported) of the second subscription to the Parameters to be Reported List IE in the E2SM-RC Action Definition Format 1.

In another example, the second subscription has the same action definition (i.e., the parameter(s) to be reported) as the first subscription, but the event trigger definition (i.e., the UE(s) that triggers aperiodic reporting) of the second subscription is partially different from that of the first subscription. In this case, the platform functions add the difference between the one or more trigger events of the second subscription and the one or more trigger events of the first subscription to the Sequence of UE Information Change IE of the E2SM-RC Event Trigger Definition Format 4.

### Second Example Embodiment

The example configuration of a radio communication system according to this example embodiment may be the same as the example shown in Fig. 1. This example embodiment provides details of the enhancements that allow the Near-RT RIC 1 and the E2 Node 2 to update an existing REPORT type subscription described in the first example embodiment.

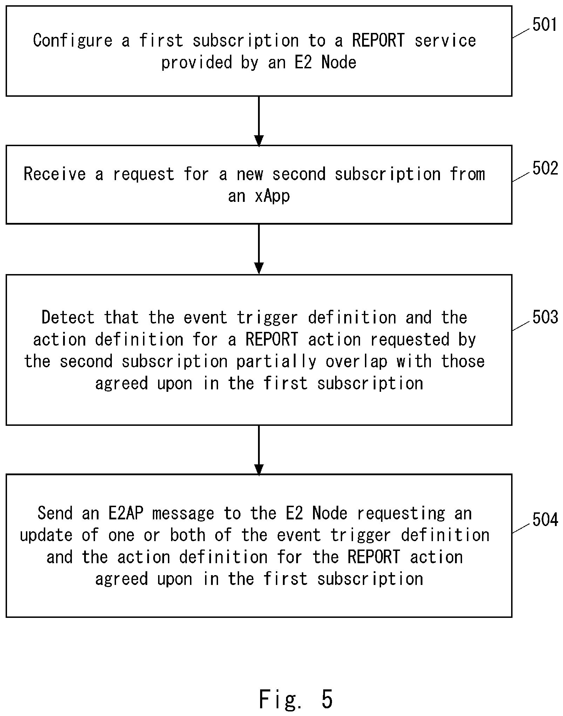

Fig. 5 shows an example of the operation of the Near-RT RIC 1 in this example embodiment. In step 501, the Near-RT RIC 1 configures a first subscription to a REPORT service provided by the E2 Node 2. Step 501 is similar to step 201 in Fig. 2, so a detailed explanation of this step is omitted.

In Step 502, the platform functions of the Near-RT RIC 1 receive a new second subscription request or proposal from an xApp. In step 503, the platform functions detect that the event trigger definition and the action definition for a REPORT action requested or proposed in the second subscription partially overlap with those agreed upon in the existing first subscription. In other words, the platform functions detect that the event trigger definition and the action definition of the second subscription are partially different from those of the existing first subscription.

In Step 504, the Near-RT RIC 1 sends an E2AP message to the E2 Node 2 requesting an update of one or both of the event trigger definition and the action definition for the REPORT action agreed upon in the first subscription. In other words, the Near-RT RIC 1 requests that the E2 Node 2 update the existing REPORT type subscription. Step 504 is similar to step 202 in Fig. 2, so a detailed explanation of this step is omitted.

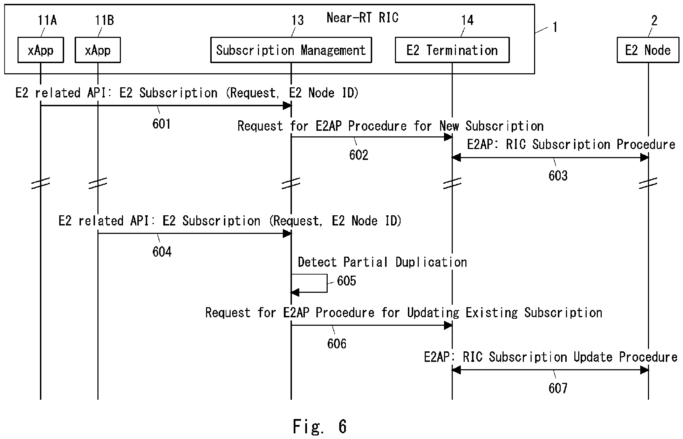

Fig. 6 shows an example of the operation of the Near-RT RIC 1 and the E2 Node 2 regarding the establishment and update of a subscription. Steps 601, 602, and 603 in Fig. 6 correspond to step 501 in Fig. 5. In step 601, the xApp subscription management 13 receives a first subscription request or proposal (e.g., E2 Subscription (Request, E2 Node ID)) for a REPORT service provided by the E2 Node 2 from the xApp 11A via an E2-related API. In step 602, the xApp subscription management 13 requests the E2 termination 14 to perform an E2AP procedure for a new subscription. In step 603, the E2 termination 14 performs a RIC Subscription procedure with the E2 Node 2 to configure, create, or establish the first subscription. Although not shown in Fig. 6, after step 603, a message is sent from the E2 termination 14 to the xApp subscription management 13 regarding the success of the first subscription, and then a message is sent from the xApp subscription management 13 to the xApp 11A.

Steps 604 to 607 in Fig. 6 correspond to steps 502 to 504 in Fig. 5. In step 604, the xApp subscription management 13 receives a second subscription request or proposal (e.g., E2 Subscription (Request, E2 Node ID)) for the REPORT service provided by the E2 Node 2 from the xApp 11B via an E2-related API. In step 605, the xApp subscription management 13 detects that the event trigger definition and the action definition of the proposed second subscription partially overlap with those of the existing first subscription. The xApp subscription management 13 may determine whether the partial overlap relationship between the first and second subscriptions is suitable for internal merging of the subscriptions.

In step 606, the xApp subscription management 13 requests the E2 termination 14 to perform an E2AP procedure to update one or both of the event trigger definition and the action definition of the existing first subscription. In step 607, the E2 termination 14 performs a RIC Subscription Update procedure with the E2 Node 2 to update the first subscription for the REPORT service. As described in the first example embodiment, the procedure in step 607 may be a RIC Subscription procedure initiated by a RIC Subscription Request message that explicitly specifies the RIC REQUEST ID of the existing first subscription. Although not shown in Fig. 6, after step 607, a message is sent from the E2 termination 14 to the xApp subscription management 13 regarding the success of updating the first subscription, and a message is sent from the xApp subscription management 13 to the xApp 11B.

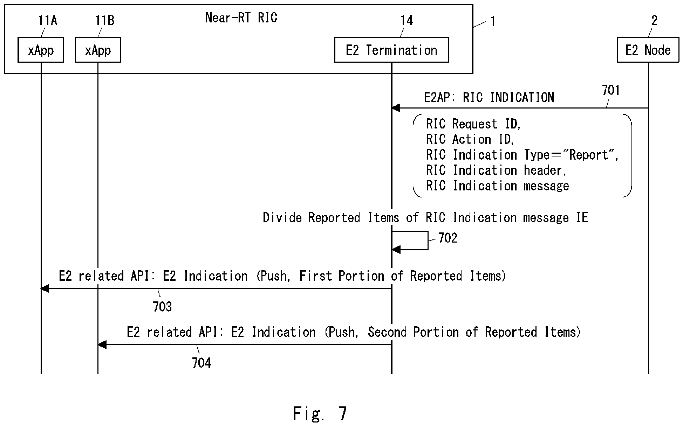

Fig. 7 shows an example of the operation of the Near-RT RIC 1 and the E2 Node 2 regarding the delivery of a RIC INDICATION message. In step 701, the E2 Node 2 sends an E2AP RIC INDICATION message associated with a REPORT type subscription to the E2 termination 14. The E2AP RIC INDICATION message includes a RIC Request ID IE, a RIC Action ID IE, a RIC Indication Type IE, a RIC Indication Header IE, and a RIC Indication Message IE.

If the RIC Request ID number specified in the RIC Request ID IE of the E2AP RIC INDICATION message is associated with multiple partially different subscriptions that have been internally merged, the E2 termination 14 performs steps 702 to 704. More specifically, if multiple subscriptions with the same event trigger definition but different action definitions have been merged, the E2 termination 14 performs steps 702 to 704.

In step 702, the E2 termination 14 divides the report items (e.g., measured values of multiple measurement items) contained in the RIC INDICATION MESSAGE IE and generates multiple indication messages, each of which is directed to a respective one of the multiple subscriptions. The E2 termination 14 then sends the generated multiple indication messages to the corresponding multiple xApps via the E2-related API. In the example of Fig. 7, the E2 termination 14 sends an indication message containing the segmented first part of the report items to the xApp 11A (step 703), and sends an indication message containing the segmented second part of the report items to the xApp 11B (step 704).

The processing of step 702 may be performed by another platform function other than the E2 termination 14, or by a dedicated xApp. Similarly, the processing of steps 703 and 704 may be performed by another platform function other than the E2 termination 14, or by a dedicated xApp.

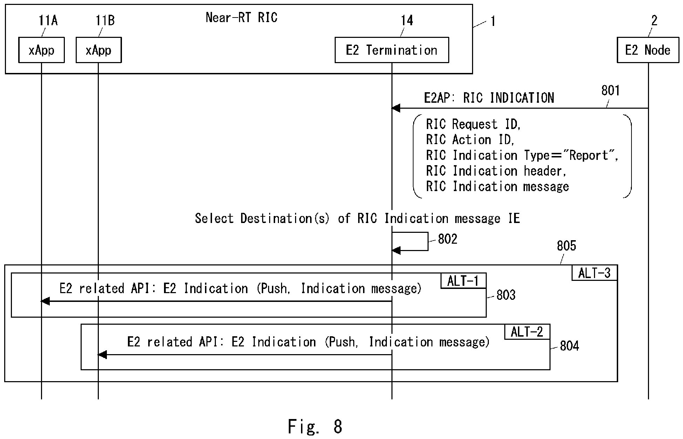

Fig. 8 shows another example of the operation of the Near-RT RIC 1 and the E2 Node 2 regarding the delivery of the RIC INDICATION message. Step 801 is similar to step 701 in Fig. 7.

If the RIC Request ID number specified in the RIC Request ID IE of the E2AP RIC INDICATION message is associated with multiple partially different subscriptions that have been internally merged, the E2 termination 14 performs step 802 and selectively performs one of steps 803-805. More specifically, if multiple subscriptions with the same action definition but different event trigger definitions have been merged, the E2 termination 14 performs step 802 and performs one of steps 803-805.

In step 802, the E2 termination 14 selects one or more destination xApps, from among the multiple xApps associated with the merged multiple subscriptions, to which the report items contained in the RIC Indication Message IE of the E2AP RIC INDICATION message of step 801 are to be delivered. Specifically, to determine the destination xApp(s) to which a periodic report is to be delivered, the E2 termination 14 may refer to the start time of the measurement collection (timestamp information) indicated by the Collection Start Time IE in the RIC Indication header IE of the E2AP RIC INDICATION message. Alternatively, to determine the destination xApp(s) to which an aperiodic report is to be delivered, the E2 termination 14 may refer to the event trigger condition indicated by the Event Trigger Condition ID IE in the RIC Indication header IE of the E2AP RIC INDICATION message.

The E2 termination 14 sends the report item contained in the RIC INDICATION MESSAGE IE to the determined destination xApp(s). In the example in Fig. 8, the E2 termination 14 sends the report item to the xApp 11A only (step 803), to the xApp 11B only (step 804), or to both the xApps 11A and 11B (step 805).

The processing of step 802 may be performed by another platform function other than the E2 termination 14, or by a dedicated xApp. Similarly, the processing of steps 803 to 805 may be performed by another platform function other than the E2 termination 14, or by a dedicated xApp.

According to the operations described in this example embodiment, it is possible for the Near-RT RIC 1 to merge multiple subscriptions that partially overlap in terms of their trigger definitions and action definitions, and this can contribute to reducing the number of RIC INDICATION messages that the E2 Node 2 needs to send.

### Third Example Embodiment

The example configuration of a radio communication system according to this example embodiment may be the same as the example shown in Fig. 1. This example embodiment provides details of the enhancements that allow the Near-RT RIC 1 and the E2 Node 2 to update an existing REPORT type subscription described in the first example embodiment.

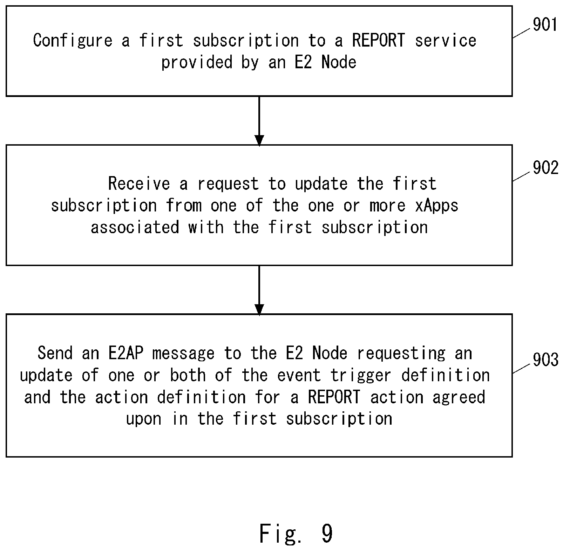

Fig. 9 shows an example of the operation of the Near-RT RIC 1 in this example embodiment. In step 901, the Near-RT RIC 1 configures a first subscription to a REPORT service provided by the E2 Node 2. Step 901 is similar to step 201 in Fig. 2, so a detailed explanation of this step is omitted.

In step 902, the platform functions of the Near-RT RIC 1 receive a request or proposal to update the first subscription from one of the one or more xApps associated with the first subscription. As described in the first example embodiment, the request or proposal to update the existing first subscription may specify an E2 Request ID to identify the existing active subscription. In addition, the request or proposal from an xApp to update the existing first subscription may specify an E2 Action ID to identify one of the one or more actions associated with the existing active subscription. The platform functions of the Near-RT RIC 1 maintain mappings of E2 Request IDs and E2 Action IDs used in the E2 Related API to RIC REQUEST IDs and RIC ACTION IDs used in the E2 interface. Accordingly, the platform functions of the Near-RT RIC 1 can determine the RIC REQUEST ID (and RIC ACTION ID) of the existing first subscription associated with the E2 Request ID (and E2 Action ID) specified by the update request or proposal received on the E2 Related API.

In Step 903, the platform functions send an E2AP message to the E2 Node 2 requesting an update of one or both of the event trigger definition and the action definition for a REPORT action agreed upon in the first subscription. In other words, the Near-RT RIC 1 requests that the E2 Node 2 update the existing REPORT type subscription. Step 903 is similar to step 202 in Fig. 2, so a detailed explanation of this step is omitted.

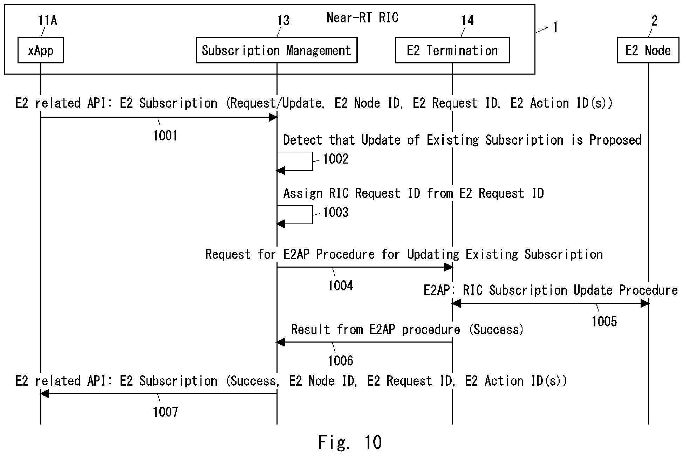

Fig. 10 shows an example of the operation of the Near-RT RIC 1 and the E2 Node 2 regarding the establishment and update of a subscription. Steps 1001 and 1002 correspond to step 902 in Fig. 9. In step 1001, the xApp subscription management 13 receives a proposal or request for an E2 subscription that contains an E2 Request ID (and one or more E2 Action IDs) associated with the existing first subscription from the xApp 11A via an E2-related API. In step 1002, the xApp subscription management 13 detects that the message in step 1001 requests or proposes to update one or both of the event trigger definition and the action definition of the existing first subscription.

Steps 1003 to 1005 correspond to step 903 in Fig. 9. In step 1003, the xApp subscription management 13 assigns a RIC REQUEST ID associated with the E2 Request ID indicated in the message of step 1001. In Step 1004, the xApp subscription management 13 requests the E2 termination 14 to perform an E2AP procedure to update one or both of the event trigger definition and the action definition of the existing first subscription. In step 1005, the E2 termination 14 performs a RIC Subscription Update procedure with the E2 Node 2 to update the first subscription for the REPORT service. As described in the first example embodiment, the procedure in step 1005 may be a RIC Subscription procedure initiated by a RIC Subscription Request message that explicitly specifies the RIC REQUEST ID of the existing first subscription

In step 1006, the E2 termination 14 sends the result of the E2AP procedure to the xApp subscription management 13. In step 1007, the xApp subscription management 13 sends the result of updating the existing subscription requested or proposed in step 1001 to the xApp 11A via the E2-related API.

As described in the first example embodiment, if the existing first subscription is associated with multiple xApps, the platform functions of the Near-RT RIC 1 may perform additional operations related to the handling of a RIC INDICATION message. These operations may be the same as those described in the second example embodiment with reference to Figs. 7 and 8.

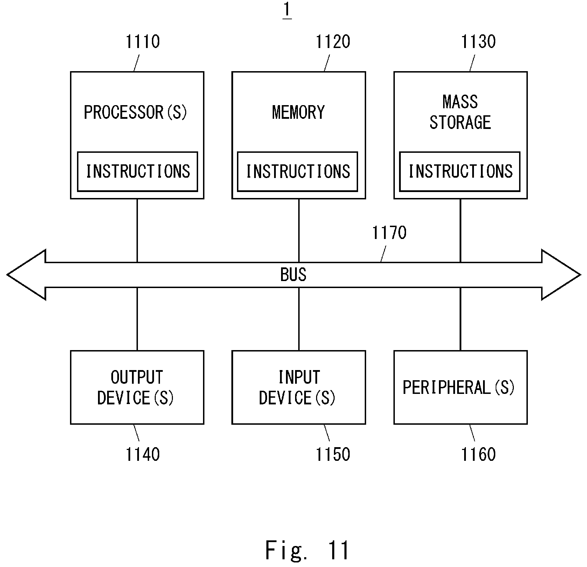

Examples of configurations of the Near-RT RIC 1 and the E2 Node 2 according to the according to the plurality of example embodiments described above are provided below. Fig. 11 is a block diagram showing an example configuration of the Near-RT RIC 1. In the example in Fig. 11, the Near-RT RIC 1 is implemented as a computer system. The computer system includes one or more processors 1110, a memory 1120, and a mass storage 1130, which communicate with one another via a bus 1170. The one or more processors 1110 may include, for example, one or both of a Central Processing Unit (CPU) and a Graphics Processing Unit (GPU). The computer system may include other devices, such as one or more output devices 1140, one or more input devices 1150, and one or more peripherals 1160. The one or more peripheral devices 1160 may include a modem, or network adapter, or any combination thereof.

One or both of the memory 1120 and the mass storage 1130 include a computer-readable medium storing one or more sets of instructions. Some or all of these instructions may be stored in a memory in the one or more processors 1110. These instructions, when executed in the one or more processors 1110, cause the one or more processors 1110 to provide the functions of the Near-RT RIC 1 or the platform functions of the Near-RT RIC 1 described in the above example embodiments.

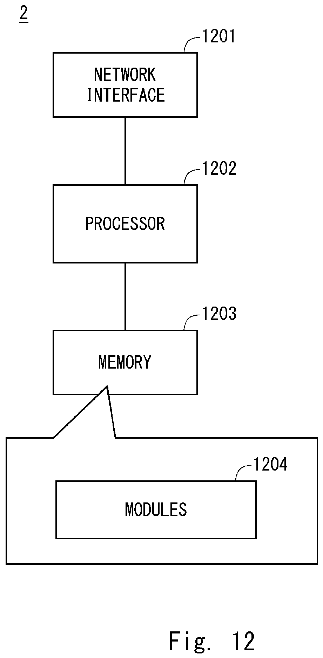

Fig. 12 shows an example configuration of the E2 Node 2. Referring to Fig. 12, the E2 Node includes a network interface 1201, a processor 1202, and a memory 1203.

The network interface 1201 is used, for example, to communicate with network elements (e.g., Near-RT RIC 1, other RAN nodes). The network interface 1201 may include, for example, a network interface card (NIC) compliant with the IEEE 802.3 series.

The processor 1202 may be, for example, a microprocessor, an MPU, or a CPU. The processor 1202 may include a plurality of processors.

The memory 1203 is composed of a volatile memory and a nonvolatile memory. The memory 1203 may include multiple physically independent memory devices. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1203 may include a storage located apart from the processor 1202. In this case, the processor 1202 may access the memory 1203 via the network interface 1201 or an I/O interface.

The memory 1203 may store one or more software modules (or computer programs) 1204 including instructions and data to perform the processing of the E2 Node 2 described in the above example embodiments. In some implementations, the processor 1202 may be configured to load the one or more software modules 1204 from the memory 1203 and execute the loaded software modules, thereby performing the processing of the E2 Node 2 described in the above example embodiments.

As explained with Figs. 11 and 12, each of the processors contained in the Near-RT RIC 1 and the E2 Node 2 according to the example embodiments described above is able to execute one or more programs containing a set of instructions to cause a computer to perform the algorithm described with reference to the drawings. The program(s) contains a set of instructions (or software codes) that, when loaded into a computer, causes the computer to perform one or more of the functions described in the example embodiments. The program(s) may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. The program(s) may be transmitted on a transitory computer readable medium or a communication medium. By way of example, and not limitation, transitory computer readable media or communication media can include electrical, optical, acoustical, or other form of propagated signals.

### Other Example Embodiments

In the above example embodiments, if the update of an existing REPORT type subscription fails, then the Near-RT RIC 1 and E2 Node 2 may continue to operate according to the existing subscription prior to initiating the update.

As described in the above example embodiments, the Near-RT RIC 1 is able to merge multiple REPORT type subscriptions that are partially different in event trigger definition and action definition, into a single subscription toward the E2 Node 2. At this point, the result of merging of the multiple REPORT type subscriptions may be different depending on the order in which these subscriptions are requested or proposed by xApps.

If a list (e.g., measurement information list, UE list) specified in the action definition format exceeds its maximum size by merging multiple REPORT type subscriptions having partially different event trigger definitions and action definitions, then the Near-RT RIC 1 does not need to perform the merge operation. In this case, the Near-RT RIC 1 can initiate a normal RIC Subscription procedure to configure a new subscription with the E2 Node 2.

The above-described example embodiments are merely examples of the application of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A computer system comprising:
at least one memory; and
at least one processor coupled to the at least one memory and configured to:
   provide a plurality of platform functions associated with a Radio Access Network (RAN) Intelligent Controller (RIC);
   configure, create, or establish between the RIC and an E2 Node a first subscription to a REPORT service provided by the E2 Node; and
   while the first subscription has already been configured, created, or established, send to the E2 Node a first message requesting an update of one or both of an event trigger definition and an action definition regarding a REPORT action that has been agreed upon in the first subscription.

### (Supplementary Note 2)

The computer system according to Supplementary Note 1, wherein the at least one processor is configured to send the first message to the E2 Node in response to receiving from a second application a request or proposal for a new second subscription whose event trigger definition and action definition regarding a REPORT action partially overlap with those agreed upon in the first subscription.

### (Supplementary Note 3)

The computer system according to Supplementary Note 2, wherein the first message causes the E2 Node to send to the RIC a common RIC INDICATION message containing both a first report item related to the first subscription and a second report item related to the second subscription.

### (Supplementary Note 4)

The computer system according to Supplementary Note 3, wherein the at least one processor is configured to:
receive the common RIC INDICATION message from the E2 Node;
send a first segmented Indication message containing the first report item but not the second report item to a first application associated with the first subscription, and
send a second segmented Indication message containing the second report item but not the first report item to the second application.

### (Supplementary Note 5)

The computer system according to Supplementary Note 3 or 4, wherein the at least one processor is configured to include in the first message a RIC ACTION DEFINITION information element (IE) indicating that reporting of the second report item is required in addition to the first report item.

### (Supplementary Note 6)

The computer system according to Supplementary Note 5, wherein the at least one processor is configured to add one or more additional measurement types associated with the second report item to a Measurement Information List IE of an E2 Service Model Key Performance Measurement (E2SM-KPM) Action Definition Format 1, 2, 3, 4, or 5.

### (Supplementary Note 7)

The computer system according to Supplementary Note 5, wherein the at least one processor is configured to add additional label information associated with the second report item to a list of labels IE associated with an existing Measurement type IE of an E2SM-KPM Action Definition Format 1.

### (Supplementary Note 8)

The computer system according to Supplementary Note 5, wherein the at least one processor is configured to:
use an E2SM-KPM Action Definition Format 1 that is extended to specify a list of Cell Global IDs; and
add an additional cell ID associated with the second report item to the list of Cell Global IDs.

### (Supplementary Note 9)

The computer system according to Supplementary Note 5, wherein the at least one processor is configured to add one or more additional UE IDs associated with the second report item to a List of Subscribed UE IDs IE of an E2SM-KPM Action Definition Format 5.

### (Supplementary Note 10)

The computer system according to Supplementary Note 9, wherein the at least one processor is configured to use the E2SM-KPM Action Definition Format 5 extended such that its minimum value of UE IDs included in the List of Subscribed UE IDs is 1.

### (Supplementary Note 11)

The computer system according to Supplementary Note 5, wherein the at least one processor is configured to add one or more additional RAN Parameter IDs associated with the second report item to a Parameters to be Reported List of an E2SM RAN Control (E2SM-RC) Action Definition Format 1.

### (Supplementary Note 12)

The computer system according to Supplementary Note 2, wherein the first message causes the E2 Node to send to the RIC a first RIC INDICATION message based on a first trigger condition according to the first subscription and a second RIC INDICATION message based on a second trigger condition according to the second subscription.

### (Supplementary Note 13)

The computer system according to Supplementary Note 12, wherein the first RIC INDICATION message and the second RIC INDICATION message each indicate an identical RIC REQUEST ID and an identical RIC ACTION ID.

### (Supplementary Note 14)

The computer system according to Supplementary Note 12 or 13, wherein the at least one processor is configured to:
selectively send an Indication message contained in the first RIC INDICATION message to a first application associated with the first subscription, without sending it to the second application associated with the second subscription; and
selectively send an Indication message contained in the second RIC INDICATION message to the second application, without sending it to the first application.

### (Supplementary Note 15)

The computer system according to Supplementary Note 14, wherein
the first trigger condition relates to periodic reporting and specifies a first reporting period,
the second trigger condition relates to periodic reporting and specifies a second reporting period, and
the at least one processor is configured to, if the second reporting period is a multiple or divisor of the first reporting period, set a Reporting Period IE in an E2SM-KPM Event Trigger Definition Format 1 to specify the lesser of the first reporting period and the second reporting period.

### (Supplementary Note 16)

The computer system according to Supplementary Note 14, wherein
the first trigger condition specifies one or more first trigger events for aperiodic reporting,
the second trigger condition specifies one or more second trigger events for aperiodic reporting, and
the at least one processor is configured to add a difference between the one or more first trigger events and the one or more second trigger events to a Sequence of Messages for Event Trigger of an E2SM-RC Event Trigger Definition Format 1, a Sequence of E2 Node Information Change of an E2SM-RC Event Trigger Definition Format 3, or a Sequence of UE Information Change of an E2SM-RC Event Trigger Definition Format 4.

### (Supplementary Note 17)

The computer system according to Supplementary Note 1, wherein the at least one processor is configured to send the first message to the E2 Node in response to receiving a request or proposal to update the first subscription from any one of one or more applications associated with the first subscription.

### (Supplementary Note 18)

The computer system according to Supplementary Note 1, wherein
the first message specifies a RIC REQUEST ID associated with the first subscription when the first subscription is configured, created, or established, and
the first message further specifies an event trigger definition and an action definition that partially overlap with an event trigger definition and an action definition specified when the first subscription is configured, created, or established.

### (Supplementary Note 19)

The computer system according to Supplementary Note 18, wherein the first message is a RIC Subscription Request message specifying a same RIC REQUEST ID and a same RIC ACTION ID as specified in a previous RIC Subscription Request message that was sent to configure, create, or establish the first subscription.

### (Supplementary Note 20)

The computer system according to Supplementary Note 1, wherein the first message is a newly defined RIC Subscription Update message different from a RIC Subscription Request message.

### (Supplementary Note 21)

The computer system according to Supplementary Note 1, wherein the REPORT service comprises sending a RIC INDICATION message from the E2 Node to the RIC.

### (Supplementary Note 22)

The computer system according to Supplementary Note 1 or 21, wherein the RIC is a Near-RT RIC.

### (Supplementary Note 23)

The computer system according to Supplementary Note 1 or 21, wherein the E2 Node is an O-RAN Central Unit - Control Plane (O-CU-CP), an O-RAN Central Unit - User Plane (O-CU-UP), an O-RAN Distributed Unit (O-DU), or an O-RAN eNodeB (O-eNB).

### (Supplementary Note 24)

An E2 Node comprising:
at least one memory; and
at least one processor coupled to the at least one memory and configured to:
   configure, create, or establish between a Radio Access Network (RAN) Intelligent Controller (RIC) and the E2 Node a first subscription to a REPORT service provided by the E2 Node;
   while the first subscription has already been configured, created, or established, receive from the RIC a first message requesting an update of one or both of an event trigger definition and an action definition regarding a REPORT action that has been agreed upon in the first subscription; and
   based on the first message, update a content of a RIC INDICATION message associated with the REPORT action, or a trigger condition for sending a RIC INDICATION message associated with the REPORT action, or both.

### (Supplementary Note 25)

The E2 Node according to Supplementary Note 24, wherein
the first message specifies a RIC REQUEST ID associated with the first subscription when the first subscription is configured, created, or established, and
the first message further specifies an event trigger definition and an action definition that partially overlap with an event trigger definition and an action definition specified when the first subscription is configured, created, or established.

### (Supplementary Note 26)

The E2 Node according to Supplementary Note 25, wherein the first message is a RIC Subscription Request message specifying a same RIC REQUEST ID and a same RIC ACTION ID as specified in a previous RIC Subscription Request message that was sent to configure, create, or establish the first subscription.

### (Supplementary Note 27)

The E2 Node according to Supplementary Note 24, wherein the first message is a newly defined RIC Subscription Update message different from a RIC Subscription Request message.

### (Supplementary Note 28)

The E2 Node according to any one of Supplementary Notes 24 to 27, wherein the REPORT service comprises sending a RIC INDICATION message from the E2 Node to the RIC.

### (Supplementary Note 29)

The E2 Node according to any one of Supplementary Notes 24 to 27, wherein the RIC is a Near-RT RIC.

### (Supplementary Note 30)

The E2 Node according to any one of Supplementary Notes 24 to 27, wherein the E2 Node is an O-RAN Central Unit - Control Plane (O-CU-CP), an O-RAN Central Unit - User Plane (O-CU-UP), an O-RAN Distributed Unit (O-DU), or an O-RAN eNodeB (O-eNB).

### (Supplementary Note 31)

A method performed by a computer system, the method comprising:
providing a plurality of platform functions associated with a Radio Access Network (RAN) Intelligent Controller (RIC);
configuring, creating, or establishing between the RIC and an E2 Node, through the plurality of platform functions, a first subscription to a REPORT service provided by the E2 Node; and
while the first subscription has already been configured, created, or established, sending to the E2 Node a first message requesting an update of one or both of an event trigger definition and an action definition regarding a REPORT action that has been agreed upon in the first subscription.

### (Supplementary Note 32)

A method performed by an E2 Node, the method comprising:
configuring, creating, or establishing between a Radio Access Network (RAN) Intelligent Controller (RIC) and the E2 Node a first subscription to a REPORT service provided by the E2 Node;
while the first subscription has already been configured, created, or established, receiving from the RIC a first message requesting an update of one or both of an event trigger definition and an action definition regarding a REPORT action that has been agreed upon in the first subscription; and
based on the first message, updating a content of a RIC INDICATION message associated with the REPORT action, or a trigger condition for sending a RIC INDICATION message associated with the REPORT action, or both.

### (Supplementary Note 33)

A non-transitory computer readable medium storing a program for causing one or more processors of a computer system to perform a method, the method comprising:
providing a plurality of platform functions associated with a Radio Access Network (RAN) Intelligent Controller (RIC);
configuring, creating, or establishing between the RIC and an E2 Node, through the plurality of platform functions, a first subscription to a REPORT service provided by the E2 Node; and
while the first subscription has already been configured, created, or established, sending to the E2 Node a first message requesting an update of one or both of an event trigger definition and an action definition regarding a REPORT action that has been agreed upon in the first subscription.

### (Supplementary Note 34)

A non-transitory computer readable medium storing a program for causing one or more processors of an E2 Node to perform a method, the method comprising:
configuring, creating, or establishing between a Radio Access Network (RAN) Intelligent Controller (RIC) and the E2 Node a first subscription to a REPORT service provided by the E2 Node;
while the first subscription has already been configured, created, or established, receiving from the RIC a first message requesting an update of one or both of an event trigger definition and an action definition regarding a REPORT action that has been agreed upon in the first subscription; and
based on the first message, updating a content of a RIC INDICATION message associated with the REPORT action, or a trigger condition for sending a RIC INDICATION message associated with the REPORT action, or both.

This application is based upon and claims the benefit of priority from Japanese Patent Application No. 2022-099686, filed on June 21, 2022, the disclosure of which is incorporated herein in its entirety by reference.

### Reference Signs List

- 1: Near-RT RIC
- 2: E2 Node
- 3: E2 Interface
- 11: xApps
- 13: xApp Subscription Management
- 14: E2 Termination
- 21: RAN Function
- 22: E2 Agent
- 1110: Processor
- 1120: Memory
- 1130: Mass Storage
- 1202: Processor
- 1203: Memory

## Claims

1. A computer system comprising:
at least one memory; and
at least one processor coupled to the at least one memory and configured to:
provide a plurality of platform functions associated with a Radio Access Network (RAN) Intelligent Controller (RIC);
configure, create, or establish between the RIC and an E2 Node a first subscription to a REPORT service provided by the E2 Node; and
while the first subscription has already been configured, created, or established, send to the E2 Node a first message requesting an update of one or both of an event trigger definition and an action definition regarding a REPORT action that has been agreed upon in the first subscription.

2. The computer system according to claim 1, wherein the at least one processor is configured to send the first message to the E2 Node in response to receiving from a second application a request or proposal for a new second subscription whose event trigger definition and action definition regarding a REPORT action partially overlap with those agreed upon in the first subscription.

3. The computer system according to claim 2, wherein the first message causes the E2 Node to send to the RIC a common RIC INDICATION message containing both a first report item related to the first subscription and a second report item related to the second subscription.

4. The computer system according to claim 3, wherein the at least one processor is configured to:
receive the common RIC INDICATION message from the E2 Node;
send a first segmented Indication message containing the first report item but not the second report item to a first application associated with the first subscription, and
send a second segmented Indication message containing the second report item but not the first report item to the second application.

5. The computer system according to claim 3 or 4, wherein the at least one processor is configured to include in the first message a RIC ACTION DEFINITION information element (IE) indicating that reporting of the second report item is required in addition to the first report item.

6. The computer system according to claim 5, wherein the at least one processor is configured to add one or more additional measurement types associated with the second report item to a Measurement Information List IE of an E2 Service Model Key Performance Measurement (E2SM-KPM) Action Definition Format 1, 2, 3, 4, or 5.

7. The computer system according to claim 5, wherein the at least one processor is configured to add additional label information associated with the second report item to a list of labels IE associated with an existing Measurement type IE of an E2SM-KPM Action Definition Format 1.

8. The computer system according to claim 5, wherein the at least one processor is configured to:
use an E2SM-KPM Action Definition Format 1 that is extended to specify a list of Cell Global IDs; and
add an additional cell ID associated with the second report item to the list of Cell Global IDs.

9. The computer system according to claim 5, wherein the at least one processor is configured to add one or more additional UE IDs associated with the second report item to a List of Subscribed UE IDs IE of an E2SM-KPM Action Definition Format 5.

10. The computer system according to claim 9, wherein the at least one processor is configured to use the E2SM-KPM Action Definition Format 5 extended such that its minimum value of UE IDs included in the List of Subscribed UE IDs is 1.

11. The computer system according to claim 5, wherein the at least one processor is configured to add one or more additional RAN Parameter IDs associated with the second report item to a Parameters to be Reported List of an E2SM RAN Control (E2SM-RC) Action Definition Format 1.

12. The computer system according to claim 2, wherein the first message causes the E2 Node to send to the RIC a first RIC INDICATION message based on a first trigger condition according to the first subscription and a second RIC INDICATION message based on a second trigger condition according to the second subscription.

13. The computer system according to claim 12, wherein the first RIC INDICATION message and the second RIC INDICATION message each indicate an identical RIC REQUEST ID and an identical RIC ACTION ID.

14. The computer system according to claim 12 or 13, wherein the at least one processor is configured to:
selectively send an Indication message contained in the first RIC INDICATION message to a first application associated with the first subscription, without sending it to the second application associated with the second subscription; and
selectively send an Indication message contained in the second RIC INDICATION message to the second application, without sending it to the first application.

15. The computer system according to claim 14, wherein
the first trigger condition relates to periodic reporting and specifies a first reporting period,
the second trigger condition relates to periodic reporting and specifies a second reporting period, and
the at least one processor is configured to, if the second reporting period is a multiple or divisor of the first reporting period, set a Reporting Period IE in an E2SM-KPM Event Trigger Definition Format 1 to specify the lesser of the first reporting period and the second reporting period.

16. The computer system according to claim 14, wherein
the first trigger condition specifies one or more first trigger events for aperiodic reporting,
the second trigger condition specifies one or more second trigger events for aperiodic reporting, and
the at least one processor is configured to add a difference between the one or more first trigger events and the one or more second trigger events to a Sequence of Messages for Event Trigger of an E2SM-RC Event Trigger Definition Format 1, a Sequence of E2 Node Information Change of an E2SM-RC Event Trigger Definition Format 3, or a Sequence of UE Information Change of an E2SM-RC Event Trigger Definition Format 4.

17. The computer system according to claim 1, wherein the at least one processor is configured to send the first message to the E2 Node in response to receiving a request or proposal to update the first subscription from any one of one or more applications associated with the first subscription.

18. The computer system according to claim 1, wherein
the first message specifies a RIC REQUEST ID associated with the first subscription when the first subscription is configured, created, or established, and
the first message further specifies an event trigger definition and an action definition that partially overlap with an event trigger definition and an action definition specified when the first subscription is configured, created, or established.

19. The computer system according to claim 18, wherein the first message is a RIC Subscription Request message specifying a same RIC REQUEST ID and a same RIC ACTION ID as specified in a previous RIC Subscription Request message that was sent to configure, create, or establish the first subscription.

20. The computer system according to claim 1, wherein the first message is a newly defined RIC Subscription Update message different from a RIC Subscription Request message.

21. The computer system according to claim 1, wherein the REPORT service comprises sending a RIC INDICATION message from the E2 Node to the RIC.

22. The computer system according to claim 1 or 21, wherein the RIC is a Near-RT RIC.

23. The computer system according to claim 1 or 21, wherein the E2 Node is an O-RAN Central Unit - Control Plane (O-CU-CP), an O-RAN Central Unit - User Plane (O-CU-UP), an O-RAN Distributed Unit (O-DU), or an O-RAN eNodeB (O-eNB).

24. An E2 Node comprising:
at least one memory; and
at least one processor coupled to the at least one memory and configured to:
configure, create, or establish between a Radio Access Network (RAN) Intelligent Controller (RIC) and the E2 Node a first subscription to a REPORT service provided by the E2 Node;
while the first subscription has already been configured, created, or established, receive from the RIC a first message requesting an update of one or both of an event trigger definition and an action definition regarding a REPORT action that has been agreed upon in the first subscription; and
based on the first message, update a content of a RIC INDICATION message associated with the REPORT action, or a trigger condition for sending a RIC INDICATION message associated with the REPORT action, or both.

25. The E2 Node according to claim 24, wherein
the first message specifies a RIC REQUEST ID associated with the first subscription when the first subscription is configured, created, or established, and
the first message further specifies an event trigger definition and an action definition that partially overlap with an event trigger definition and an action definition specified when the first subscription is configured, created, or established.

26. The E2 Node according to claim 25, wherein the first message is a RIC Subscription Request message specifying a same RIC REQUEST ID and a same RIC ACTION ID as specified in a previous RIC Subscription Request message that was sent to configure, create, or establish the first subscription.

27. The E2 Node according to claim 24, wherein the first message is a newly defined RIC Subscription Update message different from a RIC Subscription Request message.

28. The E2 Node according to any one of claims 24 to 27, wherein the REPORT service comprises sending a RIC INDICATION message from the E2 Node to the RIC.

29. The E2 Node according to any one of claims 24 to 27, wherein the RIC is a Near-RT RIC.

30. The E2 Node according to any one of claims 24 to 27, wherein the E2 Node is an O-RAN Central Unit - Control Plane (O-CU-CP), an O-RAN Central Unit - User Plane (O-CU-UP), an O-RAN Distributed Unit (O-DU), or an O-RAN eNodeB (O-eNB).

31. A method performed by a computer system, the method comprising:
providing a plurality of platform functions associated with a Radio Access Network (RAN) Intelligent Controller (RIC);
configuring, creating, or establishing between the RIC and an E2 Node, through the plurality of platform functions, a first subscription to a REPORT service provided by the E2 Node; and
while the first subscription has already been configured, created, or established, sending to the E2 Node a first message requesting an update of one or both of an event trigger definition and an action definition regarding a REPORT action that has been agreed upon in the first subscription.

32. A method performed by an E2 Node, the method comprising:
configuring, creating, or establishing between a Radio Access Network (RAN) Intelligent Controller (RIC) and the E2 Node a first subscription to a REPORT service provided by the E2 Node;
while the first subscription has already been configured, created, or established, receiving from the RIC a first message requesting an update of one or both of an event trigger definition and an action definition regarding a REPORT action that has been agreed upon in the first subscription; and
based on the first message, updating a content of a RIC INDICATION message associated with the REPORT action, or a trigger condition for sending a RIC INDICATION message associated with the REPORT action, or both.

33. A non-transitory computer readable medium storing a program for causing one or more processors of a computer system to perform a method, the method comprising:
providing a plurality of platform functions associated with a Radio Access Network (RAN) Intelligent Controller (RIC);
configuring, creating, or establishing between the RIC and an E2 Node, through the plurality of platform functions, a first subscription to a REPORT service provided by the E2 Node; and
while the first subscription has already been configured, created, or established, sending to the E2 Node a first message requesting an update of one or both of an event trigger definition and an action definition regarding a REPORT action that has been agreed upon in the first subscription.

34. A non-transitory computer readable medium storing a program for causing one or more processors of an E2 Node to perform a method, the method comprising:
configuring, creating, or establishing between a Radio Access Network (RAN) Intelligent Controller (RIC) and the E2 Node a first subscription to a REPORT service provided by the E2 Node;
while the first subscription has already been configured, created, or established, receiving from the RIC a first message requesting an update of one or both of an event trigger definition and an action definition regarding a REPORT action that has been agreed upon in the first subscription; and
based on the first message, updating a content of a RIC INDICATION message associated with the REPORT action, or a trigger condition for sending a RIC INDICATION message associated with the REPORT action, or both.
